# EUROPÄISCHE PATENTSCHRIFT

(11) **EP 1 588 383 B1**
(45) Veröffentlichungstag und Bekanntmachung des Hinweises auf die Patenterteilung: **15.10.2008**
(21) Anmeldenummer: 03795926.9
(22) Anmeldetag: 18.12.2003
(51) Int. Cl.: G12B 21/06, G12B 21/02

(54) **SONDE FüR EIN OPTISCHES NAHFELDMIKROSKOP UND VERFAHREN ZU DEREN HERSTELLUNG**
PROBE FOR AN OPTICAL NEAR FIELD MICROSCOPE AND METHOD FOR PRODUCING THE SAME
SONDE POUR UN MICROSCOPE OPTIQUE A CHAMP PROCHE ET PRODEDE DE PRODUCTION DE LADITE SONDE

(30) Priorität: 31.01.2003 DE 10303961
(43) Veröffentlichungstag der Anmeldung: 26.10.2005
(73) Patentinhaber: Fraunhofer-Gesellschaft zur Förderung der angewandten Forschung e.V., 80686 München (DE)
(72) Erfinder: BRANDENBURG, Albrecht, 79104 Freiburg (DE); KÜNZEL, Christa, 79104 Freiburg (DE); EBERHARD, Dietmar, 79341 Kenzigen (DE)
(74) Vertreter: Grünecker, Kinkeldey, Stockmair & Schwanhäusser Anwaltssozietät
(86) Internationale Anmeldenummer: PCT/EP2003/014555
(87) Internationale Veröffentlichungsnummer: WO 2004/068501

(56) Entgegenhaltungen:
- EP-A- 0 860 726
- EP-A- 1 111 426
- EP-A- 1 130 379
- EP-A- 1 146 376
- DE-A- 19 509 903
- DE-A- 19 713 746
- DE-A- 19 923 444
- DE-C- 4 314 301
- JP-A- 8 334 521
- US-A- 5 354 985
- US-A- 5 581 083
- US-A- 5 638 111
- PATENT ABSTRACTS OF JAPAN Bd. 2000, Nr. 01, 31. Januar 2000 (2000-01-31) -& JP 11 281657 A (SEIKO INSTRUMENTS INC; AGENCY OF IND SCIENCE & TECHNOL), 15. Oktober 1999 (1999-10-15)

## Beschreibung

Die vorliegende Erfindung betrifft eine Sonde für ein optisches Nahfeldmikroskop, welche eine Sondenspitze umfasst, die an einem freitragenden Träger ausgebildet ist, sowie ein Verfahren zu deren Herstellung.

Optische Nahfeldmikroskope werden zur Analyse von Oberflächen eingesetzt. Dabei wird eine Sonde mit einem sehr geringen Blendendurchmesser dicht an eine Probenoberfläche gebracht und ein lokales elektromagnetisches Feld detektiert, das man als optisches Nahfeld bezeichnet. Für das Auflösungsvermögen eines Nahfeldmikroskops ist die Größe der Sondenblende und die Entfernung von dieser Blende zu der Probenoberfläche entscheidend. In bekannten Vorrichtungen kann die Entfernung von der Blende zu der Probenoberfläche beispielsweise mit einem Scherkraftmechanismus oder einer Piezosteuerung bereits auf sehr geringe Abstände eingestellt werden. Es ist jedoch immer noch sehr schwierig, sehr geringe Blendengrößen reproduzierbar herzustellen.

Gegenwärtig werden für optische Nahfeldmikroskope Sonden hergestellt, die aus einer optischen Faser bestehen, die durch ein Ziehen bei hohen Temperaturen an einem Ende spitz zuläuft. Seitlich wird die gezogene Faser metallisch beschichtet, so dass an einem Faserende eine kleine Blende entsteht, durch die Licht aus der Faser austreten kann. Derartige Blenden haben eine Größe von ca. 100 Nanometer. Die damit erreichbare optische Auflösung eines Nahfeldmikroskops ist zwar höher als die eines konventionellen Mikroskops, ist jedoch nicht um Größenordnungen besser.

Zudem sind die oben beschriebenen Glasfaserspitzen nicht im erwünschten Maße reproduzierbar, so dass nach einem Wechsel der Faserspitze die Bilder des optischen Nahfeldmikroskops bezüglich Auflösung und Kontrast variieren können. Ein Auswechseln der Spitzen in einem Nahfeldmikroskop ist außerdem aufwendig, da jeweils die gesamte Fasersonde ausgewechselt werden muss. Unter anderem muss dabei auch die Einkopplung des Faserlichtes in die Fasern neu optimiert werden. Weiterhin ist mit dem Faserziehverfahren in einem Arbeitsgang nur eine einzelne Spitze herstellbar, was die Sonden teuer macht.

Die Druckschrift EP 1 111 426 A2 offenbart eine Sonde für ein Nahfeldmikroskop sowie ein Verfahren zu deren Herstellung. Die Sonde weist eine Sondenspitze, einen Träger in Form eines Cantilevers, eine als Aufhängung für den Cantilever dienende Basis, eine um die Sondenspitze vorgesehene Abschattungsschicht und eine offene Apertur an der Sondenspitze auf. Gemäß der Druckschrift EP 1 111 426 A2 wird Licht durch den Träger in einem Bereich gegenüber der Sondenspitze in diese eingekoppelt.

Entsprechend einem in der Druckschrift offenbarten Verfahren sind die Sondenspitze und der Träger einstückig aus dem gleichen Material ausgebildet, wobei dieses Material für einfallendes Licht transparent ist. Die Druckschrift erwähnt jedoch auch, dass Träger und Sondenspitze aus unterschiedlichen transparenten Materialien ausgebildet sein können, wobei der Cantilever aus Siliziumdioxid und die Spitze aus Diamant bestehen.

Gemäß einem weiteren in der Druckschrift EP 1 111 426 A2 offenbarten Verfahren wird zunächst ein vorstrukturiertes Substrat zur Verfügung gestellt, auf welchem eine Schicht abgeschieden wird, um später aus dieser Schicht ein Gewicht für die Sondenspitze auszubilden. Entsprechend diesem Verfahren erfolgt erst danach die Abscheidung der später den Cantilever und die Sondenspitze ausbildenden Schicht, die dann weiter strukturiert werden kann.

Die Druckschrift EP 1 130 379 A1 beschreibt einen optischen Cantilever für ein SNOM-Mikroskop, der einen als Aufhängung dienenden Basisbereich, einen aus dem Material des Basisbereiches ausgebildeten und sich von diesem erstreckenden Cantileverbereich und eine mit einer Lichtabschirmungsschicht versehene Sondenspitze aufweist. Das Licht kann durch den Cantilever, aber nicht durch das Material des Cantilevers, in einem der Sondenspitze gegenüberliegenden Bereich in diese eingekoppelt werden.

Die Druckschrift US 5,638,111 beinhaltet eine optische Sonde, welche beispielsweise in einem Rastertunnelmikroskop, einem ASM oder einem MSM Anwendung finden kann. Die Sonde ist aus einem transparenten, flachen Substrat aufgebaut, wobei eine Sondenspitze von dem flachen Substrat herausragt und auf der Oberfläche der Struktur eine Reflexionsschicht so vorgesehen ist, dass der Spitzenbereich der Sondenspitze offen ist. Der offene Bereich der Spitze ist im nm-Bereich. Bei der Sonde gemäß der Druckschrift US 5,638,111 kann Licht beispielsweise über eine Linse von hinten durch das Substrat hindurch in die Sondenspitze gerichtet werden.

Die Druckschrift DE 199 23 444 A1 offenbart eine lichttransparente Sondenspitze für ein optisches Nahfeld-Mikroskop sowie ein Verfahren zu deren Herstellung. Die Sondenspitze befindet sich auf einer flexiblen Membran oder einem Biegebalken. Das Licht kann durch die Membran von hinten in die Sondenspitze eingekoppelt werden.

Die Druckschrift US 5,581,083 zeigt eine Sondenstruktur für SNOM-Mikroskope und ein Verfahren zu deren Herstellung, wobei die Sonde aus einem Cantilever mit einer Sondenspitze besteht, welche entweder einstückig oder separat voneinander hergestellt werden können, wobei der Cantilever und die Spitze beispielsweise aus Siliziumnitrid bestehen und damit lichtdurchlässig sein können. Auf der Sondenspitze sind zwei leitfähige Schichten aufgebracht, wobei der Sondenspitzenbereich nicht mit diesen Schichten abgedeckt ist. Bei der beschriebenen Sondenstruktur kann Licht als nahfeldoptisches Signal durch eine Öffnung der Sondenspitze hindurchgehen, wobei das Signal auch das Trägermaterial durchdringt.

Die Druckschrift EP 1 146 376 A1 befasst sich mit der Herstellung, Reparatur oder Wiederherstellung von Sonden für SNOM-Mikroskope. Die Druckschrift zeigt eine aus einem flexiblen Cantilever vorgesehene Sondenspitze mit einem transparenten Kern und einer lichtundurchlässigen Beschichtung. Die Sondenspitze weist in ihrem Spitzenbereich eine sehr kleine Apertur auf. Das Licht kann durch den Cantilever von einer der Sondenspitze gegenüberliegenden Seite in die Sondenspitze eingekoppelt werden.

Die Druckschrift JP 09334521 A enthält eine SNOM-Sondenstruktur mit einem Cantilever aus n-dotiertem Silizium, einer sich durch den Cantilever erstreckenden konischen Sondenspitze aus einem lichtdurchlässigen Material wie zum Beispiel Siliziumnitrid und eine Aufhängung, an welcher der Cantilever aufgehängt ist. Auf der Sondenspitze ist eine lichtundurchlässige Schicht aufgebracht, welche den Spitzenbereich der Sondenspitze nicht abdeckt.

Die Druckschrift US 5,354,985 zeigt eine Sondenspitze für ein optisches Nahfeldmikroskop und ein zugehöriges Verfahren. Die Sondenspitze wird mittels eines Ätzverfahrens auf einem planen, lichtundurchlässigen Siliziumträger erzeugt, mit einer SiO₂- und einer Si₃N₄-Schicht bedeckt sowie von einer lichtundurchlässigen Aluminiumschicht ummantelt, woraufhin nur der Gipfelbereich der Spitze freigelegt wird.

Die zwischen der SiO₂- und der Aluminiumschicht befindliche Si₃N₄-Schicht bildet einen Wellenleiter aus, der seitlich eingekoppeltes Licht zur Sondenspitze transportieren soll. Auch hier ist, bedingt durch die Form der Lichtleitung zur Sondenspitze mit erheblichen Lichtverlusten zu rechnen.

Die Druckschrift JP 11-281657, beschreibt Sondenspitzenstrukturen und deren Herstellung. Gemäß einer Ausführungsform dieser Druckschrift ist eine als eine Vollstruktur ausgebildete Sondenspitze mit einem spitz zulaufenden Spitzenbereich auf einem planen Träger ausgebildet. Der Träger und die Spitze sind mit einer lichtundurchlässigen Schicht abgedeckt, auf welcher eine lichtdurchlässige Schicht aufgebracht wurde, die wiederum von einer lichtundurchlässigen Schicht abgedeckt ist. Die von der lichtundurchlässigen Schicht ummantelte lichtdurchlässige Schicht soll Licht von einem Seitenbereich der Struktur bis hin zu der Sondenspitze zu führen.

Die Druckschrift DE 197 13 746 A1 zeigt einen Sensor für eine gleichzeitige Raster-Kraft-Mikroskopie und optische Nahfeldmikroskopie. Der Sensor weist eine volltransparente, nicht ummantelte Sondenspitze auf, zu welcher ein in zwei Mantelschichten eingebetteter Wellenleiter führt, der Licht zu der Sondenspitze leiten soll. An der Unter- bzw. Oberseite eines aus der Wellenleiter- und den Mantelschichten ausgebildeten Federbalkens sind flächige Elektroden vorgesehen.

Die Druckschrift DE 43 14 301 C1 offenbart eine Abtastvorrichtung zur Untersuchung von Oberflächenstrukturen und ein zugehöriges Verfahren. Die Abtastvorrichtung weist Sensorspitzen aus photostrukturiertem Glas auf, wobei das Glas auf der den Spitzen gegenüberliegenden Seite mit einer reflektierenden Beschichtung versehen ist. Die Spitzen selbst weisen keine reflektierende Beschichtung auf.

Die Druckschrift DE 195 09 903 A1 beschreibt ein Verfahren zum Herstellen einer Sonde, bei dem eine auf einem Siliziumsubstrat aufgebrachte Siliziumnitridschicht über eine strukturierte Lackschicht isotrop zu einer Vollstruktur-Spitze geätzt wird. Die so geätzte Spitze kann auf einem mit einem Substrat freitragend verbundenen Träger angeordnet werden.

Die DE 199 26 601 A1 beschreibt eine Sonde und ein zugehöriges Herstellungsverfahren, wobei eine Sondenspitze in Form eines hohlen Trichters ausgebildet ist, dessen Innenseitenwände mit einem Oxid bedeckt sind und der sich durch die Dicke eines Biegebalkens erstreckt, der an einem Substrat aufgehangen ist.

Um eine solche Sonde herzustellen, wird zunächst ein Element hergestellt, in das eine V-Grube mit oxidbeschichteten Innenseitenwänden eingebracht wurde. Dieses Element wird dann auf ein in einem zweiten Prozess hergestelltes schwingfähiges Halteelement aufgebracht. Dieser Verbund wird anschließend von Seiten des Halteelementes so weit geätzt, bis ein Spitzenbereich der beschichteten V-Grube einseitig vorragt. Die Technologie ist durch die Vielzahl von Prozeßschritten sehr umständlich und teuer und kann infolge des eingesetzten Fügeschrittes zu einer mangelhaften Reproduzierbarkeit der Sonden führen.

Die US 6,333,497 B2 und die US 6,211,532 B1 zeigen trichterförmige hohle Sondenspitzen, die mittels einer Hybridmontagetechnik auf einen Träger aufgebracht werden. Des weiteren beschreibt die US 5,966,482 eine Sonde, bei der eine mikromechanisch hergestellte Spitze auf einer Membran aufgebracht ist, die sich streifenartig zwischen zwei Stützpfeilern erstreckt.

Die oben genannten Hybridmontagetechniken erweisen sich insbesondere bei der Herstellung von sehr kleinen Sondenspitzen als sehr aufwendig und führen zu einer mangelhaften Reproduzierbarkeit der Ergebnisse. Daher können durch die genannten Technologien die Nachteile der oben beschriebenen Glasfaserspitzen für die Nahfeldmikroskopie nicht ausgeräumt werden.

Es ist daher eine Aufgabe der vorliegenden Erfindung, eine Sonde für ein optisches Nahfeldmikroskop und ein Verfahren zu deren Herstellung zur Verfügung zu stellen, wobei die Sonde eine Sondenspitze einen sehr kleinen Blendendurchmesser besitzt, die Sonde eine gute Lichtausbeute aufweist und in einem einfachen, vorteilhaft steuerbaren Verfahren reproduzierbar hergestellt werden kann.

Diese Aufgabe wird durch eine Sonde für ein optisches Nahfeldmikroskop nach Anspruch 1 gelöst, welche eine als eine Vollstruktur ausgebildete Sondenspitze mit einem Spitzenbereich aus einem lichtdurchlässigen Material umfasst, die auf einer planen Oberfläche eines freitragenden Trägers aufgebracht ist, wobei eine Umfangsfläche der Sondenspitze und/oder einem Umgebungsbereich der Sondenspitze mit einer lichtundurchlässigen Schicht bedeckt ist und die dadurch gekennzeichnet ist, dass der Träger in einem Bereich gegenüber der Sondenspitze lichtdurchlässig ist und Licht durch den Träger in die Sondenspitze fokussierbar ist.

Die erfindungsgemäße Sonde hat den Vorteil, dass ihre Sondenspitze mit einem sehr geringen Sondenspitzendurchmesser ausgebildet werden kann, wodurch eine sehr kleine Blende zur Verfügung gestellt werden kann. Die Vollstruktur der Sondenspitze kann in einem Batchprozess auf dem Träger aufgebracht werden. Dies ermöglicht es, dass die Abmessungen der Sondenspitze und auch ihre Position relativ zu dem Träger reproduzierbar in einer einfachen technologischen Schrittfolge hergestellt werden können.

Vorteilhafterweise ist wenigstens eine Umfangsfläche der Sondenspitze und/oder ein Umgebungsbereich der Sondenspitze mit einer lichtundurchlässigen Schicht bedeckt. Damit kann ein Einfluss von Streulicht auf die Probe verringert werden, wodurch ein Messergebnis verfälscht werden könnte.

Gemäß der Erfindung weist der Träger ein Material auf, das gegenüber einem Ätzer eines Materials der Sondenspitze ätzresistent ist. Mit diesem Material kann bei dem Ausbilden der Sondenspitze der Träger geschützt werden.

Nach einem weiteren, vorteilhaften Ausführungsbeispiel der Erfindung ist der Träger mit einem Substrat freitragend verbunden. Somit ist es möglich, den Träger mit der Sondenspitze in Schwingungen zu versetzen, wodurch eine Sonde bei einem horizontalen Abscannen einer Probenoberfläche in vertikaler Richtung nachgeführt werden kann.

Die obige Aufgabe wird hinsichtlich eines Verfahrens zur Herstellung einer Sonde für ein optisches Nahfeldmikroskop erfindungsgemäß durch ein Verfahren nach Anspruch 4 mit den Schritten gelöst: Aufbringen einer transparenten Schicht auf ein Substrat; Aufbringen und Strukturieren einer weiteren transparenten Schicht auf der transparenten Schicht unter Ausbildung der Sondenspitze auf der transparenten Schicht; Beschichten einer Umfangsfläche der Sondenspitze und/oder eines Umgebungsbereiches der Sondenspitze mit einer lichtundurchlässigen Schicht; und Freiätzen eines der Sondenspitze gegenüberliegenden Bereiches der transparenten Schicht durch Ätzen des Substrates von der Seite gegenüber der Sondenspitze.

Das erfindungsgemäße Verfahren ist vorzugsweise in einem einfachen Batchprozess, d.h. in einer kontinuierlichen Schrittabfolge unter Verwendung nur eines Substrates realisierbar. Die Sondenspitze kann dabei als eine Vollstruktur durch das Aufbringen nur einer Schicht hergestellt werden. Mit dem Maskierungsschritt wird die Position der Sondenspitze genau festgelegt. Zudem können genaue und reproduzierbare Abmessungen der Sondenspitze erreicht werden.

Gemäß einem besonders günstigen Ausführungsbeispiel der Erfindung wird die transparente Schicht wenigstens auf einem ebenen Oberflächenbereich des Substrates aufgebracht. Dies ermöglicht, dass die Sondenspitze auf diesem ebenen Oberflächenbereich mit einer hohen Genauigkeit und einer hohen Reproduzierbarkeit der Abmessungen hergestellt werden kann.

Entsprechend einer weiteren vorteilhaften Ausführungsform der Erfindung wird zwischen der transparenten Schicht und dem Substrat eine Ätzstopschicht erzeugt. Hiermit kann das Substrat während des Ätzens der transparenten Schicht geschützt werden. Die Ätzstopschicht ist besonders gut geeignet, um später den Träger bzw. den Cantilever der Sonde auszubilden.

Es wird weiter bevorzugt, dass das Erzeugen der Ätzstopschicht ein Aufbringen einer Siliziumnitridschicht auf das Substrat vor dem Aufbringen der transparenten Schicht umfasst. Siliziumnitrid stellt dabei einen sehr guten Ätzstop für das Ätzen der transparenten Schicht, wie z.B. einer Siliziumoxidschicht, zur Verfügung.

In einer weiteren vorteilhaften Ausführungsform der Erfindung wird die transparente Schicht mit einer Schichtdicke von etwa 1 bis 30 µm, vorzugsweise etwa 2 bis 20 µm oder optimal von etwa 3 bis 8 µm aufgebracht. Mit diesem Verfahren kann eine besonders vorteilhafte Spitzenform realisiert werden, welche sich sehr gut für ein Vermessen einer Probenoberfläche eignet.

In einer besonders vorteilhaften Verfahrensführung nach der Erfindung umfasst das Maskieren ein Aufbringen einer α-Silizium-Schicht auf die transparente Schicht. Die α-Silizium-Schicht haftet gut auf der transparenten Schicht und ist ein sehr gutes Maskierungsmaterial für das Ätzen der transparenten Schicht, so dass die Sondenspitze mit einer hohen Genauigkeit gefertigt werden kann.

Vorzugsweise wird das Verfahren unter Abdünnen des Substrates wenigstens im Bereich der Sondenspitze durchgeführt. Dadurch ist es in vorteilhafter Weise möglich, die Sondenspitze auf einem freitragenden Träger auszubilden.

Gemäß einem besonders vorteilhaften Ausführungsbeispiel der vorliegenden Erfindung erfolgt das Abdünnen bis zu einer Ätzstopschicht. Hiermit kann die Dicke eines freitragenden Trägers definiert werden, auf dem sich die Sondenspitze befindet.

Vorzugsweise weist das Ätzen der transparenten Schicht ein isotropes Ätzen oder eine Kombination aus isotropem Ätzen und anisotropem Ätzen auf. Mit diesem Verfahren kann auf effektive Weise eine sehr vorteilhafte Spitzenform realisiert werden.

Vorzugsweise beinhaltet das Verfahren ein Beschichten von wenigstens einer Umfangsfläche der Sondenspitze und/oder von einem Umgebungsbereich der Sondenspitze mit wenigstens einem lichtundurchlässigen Material. Damit kann zumindest teilweise verhindert werden, dass Streulicht neben dem Licht aus der Sondenspitze auf eine Probe gelangt, wodurch ein Messergebnis verfälscht werden könnte.

In einer besonders günstigen Verfahrensführung wird das lichtundurchlässige Material schräg auf die Sondenspitze aufgedampft. Hiermit können die Seitenwände der Sondenspitze mit dem lichtundurchlässigen Material beschichtet werden, ohne dass die Sondenspitze bedeckt wird.

Gemäß einer bevorzugten Ausführungsform der vorliegenden Erfindung weist das Verfahren ein Einbringen wenigstens einer Öffnung in das lichtundurchlässige Material in einen Spitzenbereich der Sondenspitze auf. Mit einer solchen Öffnung kann eine Blende in der Sondenspitze realisiert werden.

Günstigerweise erfolgt das Einbringen wenigstens einer Öffnung mit einem Funkenerosionsverfahren und/oder einem Plasmaätzen. Mit diesen Verfahren können sehr kleine Öffnungen in der Sondenspitze realisiert werden, wodurch eine sehr hohe Auflösung bei der optischen Nahfeldmikroskopie erreicht werden kann.

Die Erfindung wird nachstehend anhand von Ausführungsbeispielen und zugehörigen Zeichnungen näher erläutert. In diesen zeigen:
- Figur 1: eine schematische Perspektivansicht einer Ausführungsform einer Sonde für ein optisches Nahfeldmikroskop;
- Figur 2 bis Figur 14: ein Ausführungsbeispiel eines Verfahrens zur Herstellung einer Sonde, beispielsweise der Sonde nach Figur 1, in schematischer Darstellung;
- Figur 15: eine schematische Draufsicht auf die Sondenspitzenseite einer Sonde mit einem Träger in Form eines Biegebalkens; und
- Figur 16: eine schematische Draufsicht auf die Sondenspitzenseite einer Sonde mit einem Träger in Form eines "A".

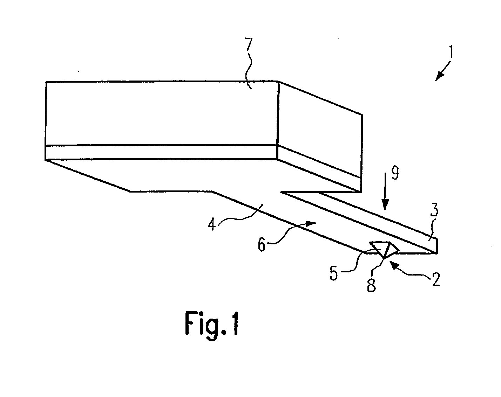

Figur 1 zeigt eine schematische Perspektivansicht einer Sonde 1 für ein optisches Nahfeldmikroskop nach einem Ausführungsbeispiel. Die Sonde 1 umfasst eine Sondenspitze 2, die auf einer ebenen Längsoberfläche 4 eines planaren freitragenden Trägers 3 ausgebildet ist. Die gezeigte Sondenspitze 2 hat eine pyramidenähnliche Form mit etwa dreieckigen Umfangsflächen 5 und einem spitz zulaufenden Spitzenbereich 8, wobei der Spitzenbereich 8 in eine Richtung entgegengesetzt zu dem Träger 3 zeigt.

In anderen Ausführungsformen der Erfindung kann die Sondenspitze die Form eines Kegels aufweisen.

Die Sondenspitze besteht aus einem transparenten Material, nämlich. Siliziumoxid. Der Träger 3 besteht beispielsweise aus Siliziumnitrid. Der Träger 3 kann in anderen Ausführungsformen der Erfindung auch aus Tandaloxid, Titanoxid, Siliziumoxinitrid oder dotiertem Siliziumoxid, wie beispielsweise Phosphorsilikatglas, ausgebildet sein.

Die Umfangsflächen 5 der Sondenspitze 2 und ein die Sondenspitze 2 umgebender Bereich 6 der Längsoberfläche 4 des Trägers 3 sind mit einer lichtundurchlässigen Schicht 15 (in Figur 1 nicht gezeigt), wie z.B. Aluminium, bedeckt.

Der Träger 3 ist einseitig mit einem Substrat 7 freitragend verbunden.

Der Spitzenbereich 8 der Sondenspitze 2 ist offen, das heißt er ist nicht mit der lichtundurchlässigen Schicht 15 bedeckt. Somit weist die Sondenspitze 2 in ihrem Spitzenbereich 8 eine Apertur auf. Damit kann Licht, beispielsweise mittels eines Laserstrahls 9 durch die lichtdurchlässige Trägerschicht 3 in die Sondenspitze 2 auf die Apertur in dem Spitzenbereich 8 der Sondenspitze 2 fokussiert werden. Das Licht kann dann durch die Sondenspitze 2 auf eine zu untersuchende Probe (nicht gezeigt) gelangen.

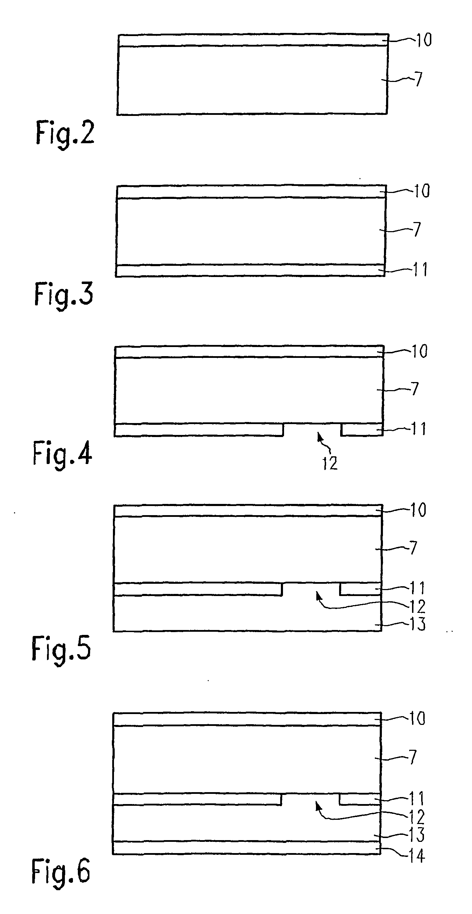

Figur 2 bis Figur 14 zeigen eine Schrittfolge eines Verfahrens zum Herstellen einer erfindungsgemäßen Sonde, beispielsweise der Sonde aus Figur 1, gemäß einer Ausführungsform der vorliegenden Erfindung.

Figur 2 zeigt im Querschnitt ein Substrat 7, das beispielsweise aus Silizium besteht. An Stelle von Silizium kann jedoch jegliches andere Substratmaterial verwendet werden, wie z.B. ein transparentes Substrat, beispielsweise aus Glas. Auf dem Substrat 7 wurde in einem ersten Schritt eine Schutzschicht 10 aufgebracht, die beispielsweise aus Siliziumnitrid besteht. Die Schutzschicht 10 wird vorzugsweise mit einem CVD-Verfahren abgeschieden.

Figur 3 zeigt die Struktur aus Figur 2, wobei auf die der Schutzschicht 10 gegenüberliegende Seite des Substrates 7 eine Ätzstopschicht 11 in einem zweiten Schritt aufgebracht wurde. Die Ätzstopschicht 11 besteht beispielsweise aus Siliziumnitrid. Die Ätzstopschicht 11 wird vorzugsweise mit einem Dünnfilmabscheidungsprozess, wie einem CVD-Verfahren abgeschieden und kann in einem Prozess mit der Schutzschicht 10 auf das Substrat 7 aufgebracht werden.

Die Ätzstopschicht 11 weist ein transparentes Material auf, das vorzugsweise einen hohen Brechungsindex und eine hohe Resistenz gegenüber einer aggressiven Umgebung besitzt. Die Ätzstopschicht 11 bildet vorzugsweise den späteren Träger oder Cantilever 3 aus.

Da die Ätzstopschicht 11 als späterer Träger 3 hohen mechanischen Belastungen ausgesetzt sein kann, ist die Ätzstopschicht 11 spannungsarm abzuscheiden. Hiermit wird ermöglicht, dass die Ätzstopschicht 11 nach dem Wegätzen des Substrates gerade bleibt. Dies kann durch spezielle Abscheidebedingungen beim Abscheiden von Siliziumnitrid aber auch durch den Einsatz anderer Materialien wie z.B. Siliziumoxinitrid mit einem speziell eingestellten Sauerstoff-Stickstoff-Verhältnis erreicht werden.

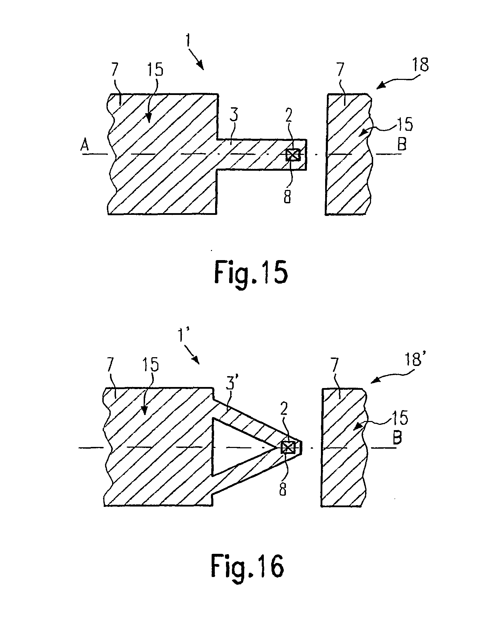

Figur 4 zeigt die Struktur aus Figur 3, wobei in einem dritten Schritt in die Ätzstopschicht 11 ein Öffnungsbereich 12, beispielsweise durch ein Maskieren der Ätzstopschicht 11 und ein darauffolgendes Ätzen der Ätzstopschicht 11 in dem Öffnungsbereich 12 erzeugt wurde. Das Freiätzen des Öffnungsbereiches 12 in der Ätzstopschicht 11 kann durch ein Trockenätzen, beispielsweise einer Si₃N₄-Schicht 11 erfolgen. Die Strukturierung der Ätzstopschicht 11 im vierten Verfahrensschritt dient einer Definition der Struktur des freitragenden Trägers oder Cantilevers 3. Mit der Strukturierung können verschiedene Geometrien des Trägers 3 realisiert werden. Beispielsweise kann der Träger 3, wie in Figur 15 gezeigt, in Form eines Biegebalkens ausgebildet werden oder, wie in Figur 16 gezeigt, die Form eines "A" besitzen.

Figur 5 zeigt die Struktur aus Figur 4, wobei in einem vierten Schritt auf die strukturierte Ätzstoppschicht 11 mit dem Öffnungsbereich 12 eine transparente Schicht 13 aufgebracht wurde. Die transparente Schicht 13 besteht aus Siliziumoxid. Die Dicke der transparenten Schicht 13 beträgt im gezeigten Ausführungsbeispiel etwa 5 µm. In anderen Ausführungsformen der Erfindung kann die Schichtdicke der transparenten Schicht 13 1 bis 30 µm oder vorzugsweise 2 bis 20 µm bzw. optimal etwa 3 bis 8 µm betragen. Vorzugsweise wird die transparente Schicht mit einem CVD-Verfahren abgeschieden.

Figur 6 zeigt die Struktur aus Figur 5, bei welcher in einem fünften Schritt auf die transparente Schicht 13 eine Maskierungsschicht 14, beispielsweise aus α-Silizium, aufgebracht wurde. Die Maskierungsschicht 14 ist wegen der relativ großen Dicke der transparenten Schicht 13 aus einem hochgradig ätzresistenten Material.

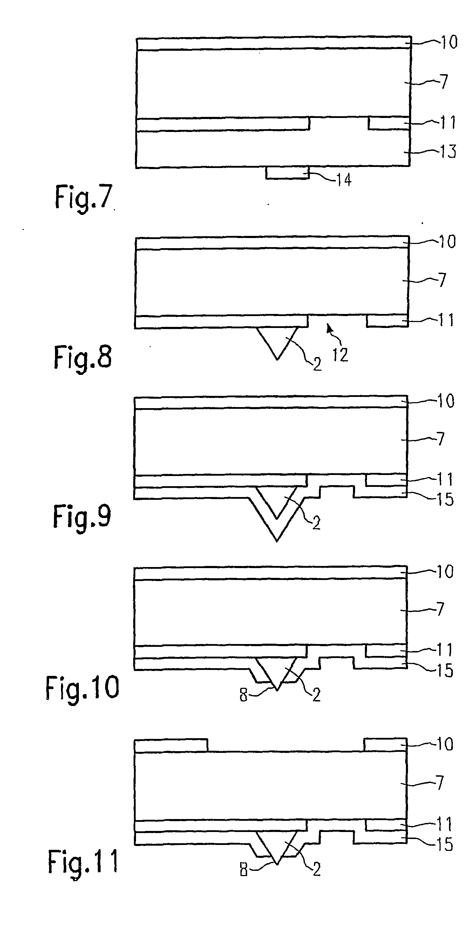

Figur 7 zeigt die Struktur aus Figur 6, wobei die Maskierungsschicht 14 strukturiert wurde. Die Strukturierung kann mit einer Photolithographie und einem darauffolgenden Ätzschritt erfolgen. Nach dem Strukturieren der Maskierungsschicht 14 verbleibt die Maskierungsschicht 14 nur in einem Bereich, in dem die Sondenspitze 2 erzeugt werden soll.

Figur 8 zeigt die Struktur aus Figur 7 nach einem siebenten Verfahrensschritt, in welchem die transparente Schicht 13 geätzt wurde. Das Ätzen kann durch ein isotropes Ätzen oder durch eine Kombination aus anisotropem und isotropem Ätzen ausgeführt werden. Bei dem isotropen Ätzschritt kann ein nasschemisches Ätzen angewendet werden. Dabei kann eine transparente Schicht aus beispielsweise Siliziumoxid z.B. mit einer HFhaltigen Lösung geätzt werden. Das anisotrope Ätzen kann mit einem Trockenätzschritt erfolgen. Die Ätzung erfolgt solange, bis sich unterhalb der Maskierungsschicht 14 die Sondenspitze 2 ausgebildet hat, wodurch sich die Maskierungsschicht 14 löst. Die Ätzung stoppt weiter an der Ätzstopschicht 11 und greift den Öffnungsbereich 12 in der Ätzstopschicht 11 nur geringfügig bzw. gar nicht an.

Das nasschemische Ätzen der transparenten Schicht 13 ist hinsichtlich der Form der Sondenspitze zu optimieren. Im Ergebnis entstehen extrem kleine Spitzenradien, in einem Spitzenbereich 8 der Sondenspitze 2, wobei die Spitzenradien kleiner 100 Nanometer und vorzugsweise in der Größenordnung von etwa 10 bis 30 Nanometern sind. Die Ätzung kann auch durch ein Dotierungsprofil in der Maskierungsschicht gesteuert werden, wodurch die Ätzraten des Materials der transparenten Schicht lokal beeinflusst werden können. Zudem ist es möglich, einem nasschemischen isotropen Ätzen der transparenten Schicht 13 eine laterale Vorstrukturierung mit einem Trockenätzprozess vorzuschalten.

Figur 9 zeigt die Struktur aus Figur 8, wobei auf die Oberfläche mit der Sondenspitze 2 eine lichtundurchlässige Schicht 15 in einem achten Schritt aufgebracht wurde. Die lichtundurchlässige Schicht 15 besteht vorzugsweise aus einem Metall, wie z.B. Aluminium.

Beispielsweise kann eine Aluminiumschicht von ca. 50 nm Dicke aufgedampft oder aufgesputtert werden. Im Normalfall wird die Beschichtung mit dem lichtundurchlässigen Material 15 nicht nur auf der Sondenspitze 2 erfolgen. Gemäß der gezeigten Ausführungsform wird die gesamte Unterseite der Struktur beschichtet, so dass bei einer Anwendung der fertigen Sonde in einem optischen Nahfeldmikroskop ein Streulicht auf der Probe aus Bereichen der Umfangsflächen 5 der Sondenspitze 2 oder einem Umgebungsbereich 6 der Sondenspitze 2 unterdrückt werden kann.

Figur 10 zeigt die Struktur aus Figur 9, bei welcher die lichtundurchlässige Schicht 15 in dem Spitzenbereich 8 der Sondenspitze 2 in einem neunten Schritt geöffnet wurde. Hierfür kann ein Funkenerosionsverfahren oder ein Plasmaätzschritt eingesetzt werden.

Das Funkenerosions- oder das Plasmaätzverfahren greift bevorzugt den Spitzenbereich 8 der Sondenspitze 2 an und trägt dort das lichtundurchlässige Material 15 ab.

In einer weiteren, hier nicht gezeigten Ausführungsform kann die Beschichtung mit dem lichtundurchlässigen Material 15 auch bereits strukturiert erfolgen, indem eine Beschichtung schräg, beispielsweise in einem Bedampfungsschritt von der Seite her erfolgt.

Figur 11 zeigt die Struktur aus Figur 10, wobei in einem zehnten Schritt die Schutzschicht 10 auf der der Sondenspitze 2 gegenüberliegenden Seite des Substrates 7 strukturiert wurde. Die Strukturierung kann mit einer Photolithographie und einem anschließenden Ätzen der Schutzschicht 10 erfolgen. Nach der Strukturierung der Schutzschicht 10 ist ein Bereich der Schutzschicht 10 entfernt und der sich etwa gegenüber der Sondenspitze 2 und einem Bereich der Ätzstopschicht 11 befindet, welche später den Träger 3 ausbilden kann. Zum Entfernen des Schutzschichtmaterials 10 wird beispielsweise ein Trockenätzverfahren eingesetzt.

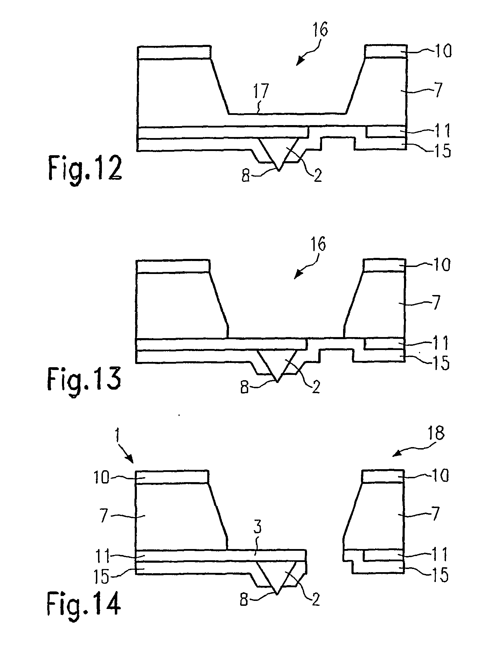

Figur 12 zeigt die Struktur aus Figur 11 nach einem elften Verfahrensschritt, in welchem das Substrat 7 von der Seite gegenüber der Sondenspitze 2 mit der verbleibenden Schutzschicht 10 als Maskierungsschicht beispielsweise mit einer KOH-Lösung geätzt wurde. Bei der Ätzung entsteht eine Grube 16, deren Boden 17 einen Abstand zu der Ätzstopschicht 11 besitzt.

Figur 13 zeigt die Struktur aus Figur 12, bei welcher in einem zwölften Verfahrensschritt das Substratmaterial 7 am Boden der Grube 16 anisotrop geätzt wurde. Damit erstreckt sich die Grube 16 bis an die Ätzstopschicht 11 bzw. die lichtundurchlässige Schicht 15 in dem Öffnungsbereich 12 der Ätzstopschicht 11.

Das Freiätzen des freitragenden Trägers oder Cantilevers 3 von der der Sondenspitze gegenüberliegenden Seite ist sehr kritisch. Bei einer nasschemiscben Ätzung kann beispielsweise auch eine unerwünschte Ätzung der Sondenspitze auf der anderen Waferseite auftreten. Mit einer kombinierten Ätzung, die zunächst nasschemisch und anschließend trocken erfolgt, ist es möglich, sich vorsichtig dem Material der Ätzstopschicht 11 unterhab der Sondenspitze 2 anzunähern, ohne die Sondenspitze 2 anzugreifen.

Figur 14 zeigt die Struktur aus Figur 13 nach einem dreizehnten Verfahrensschritt, in welchem die Sonde 1 von dem verbleibenden Material 18 separiert wurde. Die Darstellung in Figur 14 entspricht etwa dem Querschnitt entlang der Schnittlinie A-B in Figur 15. Das in Figur 14 gezeigte verbleibende Material 18 kann eine zu der Sonde 1 benachbarte Sonde mit nahezu gleichen Eigenschaften wie die Sonde 1 aufweisen.

Figur 15 ist eine schematische Draufsicht auf die Sondenspitzenseite der Sonde 1 in Figur 14 und auf die Unterseite des verbleibenden Materials 18 in Figur 14. Wie in Figur 15 zu sehen hat der Träger 3 der Sonde 1 die Form eines Biegebalkens, an dessen einem Ende die Sondenspitze 2 ausgebildet ist. Die Sondenspitzenseite, welche der Unterseite der Struktur in Figur 14 entspricht, ist ebenso wie die Unterseite des verbleibenden Materials 18 flächig mit der lichtundurchlässigen Schicht 15 bedeckt, wobei nur der Spitzenbereich 8 der Sondenspitze 2 freiliegt.

Figur 16 zeigt eine schematische Draufsicht auf die Sondenspitzenseite einer anderen Sonde 1' und eines verbleibenden Materials 18'. Die Sonde 1' weist einen Träger 3' auf, der etwa die Form eines "A" besitzt. An der oberen Spitze des "A"-förmigen Trägers 3' ist die Sondenspitze 2 ausgebildet. Die Sondenspitzenseite der Sonde 1' als auch die Unterseite des verbleibenden Materials 18' ist mit der lichtundurchlässigen Schicht 15 bedeckt, wobei nur der Spitzenbereich 8 der Sondenspitze 2 nicht bedeckt ist. Die "A"-förmige Ausbildung des Trägers 3' besitzt den Vorteil, dass Torsionsschwingungen des Trägers bzw. Cantilevers 3' gut unterdrückt werden können.

Das Separieren kann mittels eines konventionellen Sägeschrittes erfolgen. Somit entsteht eine Sonde 1, die wie in Figur 1 dargestellt, einen Träger 3 aufweist, der aus dem Ätzstopschichtmaterial 11 ausgebildet ist, wobei der Träger 3 auf dem Substrat 7 aufliegt und an einem vorderen Ende auf einer Längsoberfläche des Trägers 3 die Sondenspitze 2 mit einem freigelegten Spitzenbereich 8 und einer Ummantelung aus dem nichttransparenten Material 15 ausgebildet ist.

Beim Sägen bedarf die Sondenspitze 2 und der Träger 3 eines besonderen mechanischen Schutzes.

Mit Hilfe der vorstehend beschriebenen Technologieabfolge kann die Sondenspitze 2 mit gleichen Abmessungen und an gleicher Position reproduzierbar hergestellt werden. Die Herstellung der Sondenspitze erfolgt in einem Batchprozess, das heißt alle Prozessschritte können unter Nutzung eines Substrats zeitlich nacheinander bis zur Herstellung der fertigen Sondenstruktur ablaufen, wobei alle Einzelstrukturen des Substrates parallel bearbeitet werden können. Hiermit wird eine hohe Effektivität des Prozesses bei gleichzeitig hoher Reproduzierbarkeit insbesondere der Sondenspitzenabmessungen erreicht.

Mit dem vorliegenden Verfahren wird eine Sondenspitze realisiert, die einen sehr geringen Spitzenradius einer Größenordnung von kleiner 100 Nanometern, vorzugsweise von etwa 10 bis 30 Nanometern besitzt, womit ein freigelegter Spitzenbereich 8 herstellbar ist, der eine sehr kleine Apertur mit einem Radius von etwa 20 bis 50 Nanometer zur Verfügung stellen kann.

Die hergestellte Sonde ist leicht handhabbar, da sie sich auf einem stabilen Substrat befindet. Somit kann die Sonde relativ leicht in einem optischen Nahfeldmikroskop ausgetauscht werden. Durch die spezifische Aufhängung der Sondenspitze an dem freitragenden Träger 3 kann die Sonde schwingen, wodurch eine Regelung der Z-Position der Sonde bei einem optischen Nahfeldmikroskop leicht vorgenommen werden kann.

## Patentansprüche

1. Sonde (1) für ein optisches Nahfeldmikroskop, die eine als eine Vollstruktur ausgebildete Sondenspitze (2) mit einem Spitzenbereich (8) aus einem lichtdurchlässigen Material aufweist, die auf einer planen Oberfläche (4) eines freitragenden Trägers (3) aufgebracht ist,
wobei der Träger (3) auf einem Substrat (7) aufgebracht und mit dem Substrat (7) freitragend verbunden ist,
und der Träger (3) in einem Bereich gegenüber der Sondenspitze (2) lichtdurchlässig ist und Licht durch das Trägermaterial in die Sondenspitze (2) fokussierbar ist, und
wobei eine Umfangsfläche (5) der Sondenspitze (2) und/oder ein Umgebungsbereich (6) der Sondenspitze (2) mit einer lichtundurchlässigen Schicht (15) bedeckt ist,
**dadurch gekennzeichnet,**
**dass** die Sondenspitze (2) aus Siliziumoxid besteht und der Träger (3) ein Material aufweist, das gegenüber einem Ätzer des Materials der Sondenspitze (2) ätzresistent ist.

2. Sonde nach Anspruch 1, **dadurch gekennzeichnet, dass** der Träger (3) aus Siliziumnitrid, Tantaloxid, Titanoxid, Siliziumoxinitrid oder dotiertem Siliziumoxid ausgebildet ist.

3. Sonde nach Anspruch 1 oder 2, **dadurch gekennzeichnet, dass** der Träger (3) in Form eines "A" ausgebildet ist.

4. Verfahren zum Herstellen einer Sonde (1) mit einer Sondenspitze (2) für ein optisches Nahfeldmikroskop, nach zumindest einem der vorhergehenden Ansprüche 1 bis 3, mit den Verfahrensschritten:
- Aufbringen einer transparenten Schicht (11) auf ein Substrat (7);
- Aufbringen und Strukturieren einer weiteren transparenten Schicht (13) aus Siliziumoxid auf der transparenten Schicht (11) unter Ausbildung der Sondenspitze (2) auf der transparenten Schicht (11);
- Beschichten einer Umfangsfläche (5) der Sondenspitze (2) und/oder eines Umgebungsbereiches der Sondenspitze (2) mit einer lichtundurchlässigen Schicht (15); und
- Freiätzen eines der Sondenspitze (2) gegenüberliegenden Bereiches der transparenten Schicht (11) durch Ätzen des Substrates (7) von der Seite gegenüber der Sondenspitze (2) unter Ausbildung eines mit dem Substrat (7) freitragend verbundenen Trägers (3) für die Sondenspitze (3) auf der transparenten Schicht (11).

5. Verfahren nach Anspruch 4, **dadurch gekennzeichnet, dass** die weitere transparente Schicht (13) wenigstens auf einem ebenen Oberflächenbereich (4) des Substrates (7) aufgebracht wird.

6. Verfahren nach wenigstens einem der Ansprüche 4 oder 5, **dadurch gekennzeichnet, dass** die transparente Schicht (11) eine Ätzstoppschicht bildet.

7. Verfahren nach wenigstens einem der Ansprüche 4 bis 6, **dadurch gekennzeichnet, dass** die transparente Schicht (11) eine Siliziumnitridschicht ist.

8. Verfahren nach wenigstens einem der Ansprüche 4 bis 7, **dadurch gekennzeichnet, dass** die weitere transparente Schicht (13) mit einer Schichtdicke von etwa 1 bis 30 µm, vorzugsweise etwa 2 bis 20 µm oder optimal von etwa 3 bis 8 µm aufgebracht wird.

9. Verfahren nach wenigstens einem der Ansprüche 4 bis 8, **dadurch gekennzeichnet, dass** das Strukturieren der weiteren transparenten Schicht (13) ein Maskieren unter Aufbringen einer α-Silizium-Schicht (14) aufweist, die die weitere transparente Schicht (13) enthält.

10. Verfahren nach wenigstens einem der Ansprüche 4 bis 9, **dadurch gekennzeichnet, dass** das Substrat (7) wenigstens im Bereich der Sondenspitze (2) zunächst abgedünnt und nachfolgend das Substrat zumindest in diesem Bereich bis zum Freilegen der transparenten Schicht (11) entfernt wird.

11. Verfahren nach wenigstens einem der Ansprüche 4 bis 10, **dadurch gekennzeichnet, dass** das Strukturieren der weiteren transparenten Schicht (13) ein isotropes Ätzen oder eine Kombination aus isotropem Ätzen und anisotropem Ätzen aufweist.

12. Verfahren nach wenigstens einem der Anspprüche 4 bis 11, **dadurch gekennzeichnet, dass** das lichtundurchlässige Material (15) schräg auf die Sondenspitze (2) aufgedampft wird.

13. Verfahren nach wenigstens einem der Ansprüche 4 bis 12, **dadurch gekennzeichnet, dass** wenigstens eine Öffnung in das lichtundurchlässige Material (15) in einem Spitzenbereich (8) der Sondenspitze (2) eingebracht wird.

14. Verfahren nach Anspruch 13, **dadurch gekennzeichnet, dass** das Einbringen wenigstens einer Öffnung mit einem Funkenerosionsverfahren und/oder einem Plasmaätzen erfolgt.

## Claims

1. Probe for an optical near field microscope, which comprises a probe tip, formed as a complete structure, with a tip region of a transparent material, which is applied to a planar surface of a self-supporting carrier, wherein the carrier in an area opposite to the probe tip is transparent and light can be focused through the carrier into the probe tip and wherein a circumferential area of the probe tip and/or a surrounding region of the probe tip is covered with an opaque layer, **characterized in that** the probe tip is made of silicon oxide and the carrier comprises a material which is etch-resistant with respect to an etcher of the material of the probe tip.

2. Probe according to claim 1, **characterized In that** the carrier is made of silicon nitride, tantalum oxide, titan oxide, silicon oxinitride, or doped silicon oxide.

3. Probe according to claims 1 or 2, **characterized in that** the carrier is designed in shape of an "A".

4. Method for manufacturing a probe with a probe tip for an optical near field microscope according to at least one of the preceding claims 1 to 3, comprising the method steps:
- applying a transparent layer to a substrate;
- applying and structuring of another transparent layer made of silicon oxide onto the transparent layer under forming the probe tip on the transparent layer;
- coating of a circumferential surface of the probe tip and/or a surrounding region of the probe tip with an opaque layer; and
- free etching of an area of the transparent layer opposite to the probe tip by means of etching of the substrate from the side opposite of the probe tip under forming of a carrier connected self-supportingly to the substrate, for the probe tip on the transparent layer.

5. Method according to claim 4, **characterized in that** the another transparent layer is applied to at least one flat surface region of the substrate.

6. Method according to at least one of the preceding claims 4 or 5, **characterized in that** the transparent layer forms an etching stop layer.

7. Method according to at least one of the preceding claims 4 to 6, **characterized In that** the transparent layer is a silicon nitride layer.

8. Method according to at least one of the preceding claims 4 to 7, **characterized in that** the another transparent layer is applied with a layer thickness of approximately 1 - 30 µm, preferably approximately 2 - 20 µm or optimally from approximately 3 - 8 µm.

9. Method according to at least one of the preceding claims 4 to 8, **characterized in that** the structuring of the another transparent layer includes masking with the application of an α-silicon layer onto the another transparent layer.

10. Method according to at least one of the preceding claims 4 - 9, **characterized in that** the substrate is initially thinned down at least in the region of the probe tip and thereafter the substrate is removed at least in this region up to the exposure of the transparent layer.

11. Method according to at least one of the preceding claims 4 -10, **characterized in that** the structuring of the another transparent layer comprises an isotropic etching or a combination of isotropic etching and anisotropic etching.

12. Method according to at least one of the preceding claims 4 -11, **characterized in that** the opaque material is vapor-deposited diagonally onto the probe tip.

13. Method according to at least one of the preceding claims 4 to 12, **characterized in that** at least one opening in the opaque material is incorporated in a tip region of the probe tip.

14. Method according to claim 13, **characterized in that** the incorporation of at least one opening occurs with means of a spark erosion method and/or plasma etching.

## Revendications

1. Sonde (1) pour un microscope optique en champ proche, laquelle comporte une pointe (2) de sonde réalisée selon une structure pleine, qui possède une zone (8) en matériau translucide et qui est déposée sur une surface (4) plane d'un support (3) en porte-à-faux,
le support (3) étant déposé sur un substrat (7) et étant relié en porte-à-faux avec le substrat (7),
et le support (3) est translucide dans une zone face à la pointe (2) de sonde et la lumière peut être focalisée à travers le matériau du support dans la pointe (2) de sonde, et une surface périphérique (5) de la pointe (2) de sonde et/ou une zone environnante (6) de la pointe (2) de sonde sont revêtues d'une couche (15) opaque,
**caractérisée en ce que**
la pointe (2) de sonde est réalisée en oxyde de silicium et le support (3) comporte un matériau, qui est résistant à une gravure du matériau de la pointe (2) de sonde.

2. Sonde selon la revendication 1, **caractérisée en ce que** le support (3) est réalisé en nitrure de silicium, oxyde de tantale, oxyde de titane, oxynitrure de silicium ou est dopé à l'oxyde de silicium.

3. Sonde selon la revendication 1 ou 2, **caractérisée en ce que** le support (3) est réalisé sous la forme d'un « A ».

4. Procédé de réalisation d'une sonde (1) avec une pointe (2) de sonde pour un microscope optique en champ proche, selon au moins l'une des revendications précédentes 1 à 3, comportant les étapes de :
- dépôt d'une couche transparente (11) sur un substrat (7) ;
- dépôt et structuration d'une autre couche transparente (13) en oxyde de silicium sur la couche transparente (11) moyennant la configuration de la pointe (2) de sonde sur la couche transparente (11) ;
- revêtement d'une surface périphérique (5) de la pointe (2) de sonde et/ou d'une zone environnante de la pointe (2) de sonde avec une couche (15) opaque ; et
- dégagement d'une zone de la couche transparente (11), située en regard de la pointe (2) de sonde, par gravure du substrat (7) depuis le côté face à la pointe (2) de sonde moyennant la configuration d'un support (3), relié en porte-à-faux avec le substrat (7), pour la pointe (2) de sonde sur la couche transparente (11).

5. Procédé selon la revendication 4, **caractérisé en ce que** l'autre couche transparente (13) est déposée au moins sur une zone de surface (4) plane du substrat (7).

6. Procédé selon au moins une des revendications 4 ou 5, **caractérisé en ce que** la couche transparente (11) forme une couche arrêtant la gravure.

7. Procédé selon au moins l'une quelconque des revendications 4 à 6, **caractérisé en ce que** la couche transparente (11) est une couche de nitrure de silicium.

8. Procédé selon au moins l'une quelconque des revendications 4 à 7, **caractérisé en ce que** l'autre couche transparente (13) est déposée avec une épaisseur de couche de 1 à 30 µm environ, de préférence de 2 à 20 µm environ ou, de manière optimale, de 3 à 8 µm environ.

9. Procédé selon au moins l'une quelconque des revendications 4 à 8, **caractérisé en ce que** la structuration de l'autre couche transparente (13) comporte un masquage moyennant l'application d'une couche de silicium α (14), qui contient l'autre couche transparente (13).

10. Procédé selon au moins l'une quelconque des revendications 4 à 9, **caractérisé en ce que** le substrat (7) est d'abord diminué en épaisseur au moins dans la zone de la pointe (2) de sonde, et ensuite le substrat est éliminé au moins dans cette zone jusqu'à ce que la couche transparente (11) soit dégagée.

11. Procédé selon au moins l'une quelconque des revendications 4 à 10, **caractérisé en ce que** la structuration de l'autre couche transparente (13) comporte une gravure isotrope ou une combinaison d'une gravure isotrope et d'une gravure anisotrope.

12. Procédé selon au moins l'une quelconque des revendications 4 à 11, **caractérisé en ce que** le matériau (15) opaque est déposé en phase gazeuse en oblique sur la pointe (2) de sonde.

13. Procédé selon au moins l'une quelconque des revendications 4 à 12, **caractérisé en ce qu'**au moins une ouverture est ménagée dans le matériau (15) opaque dans une zone pointue (8) de la pointe (2) de sonde.

14. Procédé selon la revendication 13, **caractérisé en ce que** la réalisation d'au moins une ouverture est effectuée au moyen d'un procédé d'usinage par étincelage et/ou d'une gravure plasma.
